# EUROPÄISCHE PATENTSCHRIFT

(11) **EP 0 875 423 B1**
(45) Veröffentlichungstag und Bekanntmachung des Hinweises auf die Patenterteilung: **04.08.2004**
(21) Anmeldenummer: 98107041.0
(22) Anmeldetag: 17.04.1998
(51) Int. Cl.: B60R 21/02, B60R 21/18, B60T 7/12

(54) **Fahrerrückhaltevorrichtung für ein Flurförderzeug**
Driver restraint device for an industrial truck
Dispositif de retenue pour le conducteur d'un chariot de manutention

(30) Priorität: 28.04.1997 DE 19717895
(43) Veröffentlichungstag der Anmeldung: 04.11.1998
(73) Patentinhaber: STILL GMBH, D-22113 Hamburg (DE)
(72) Erfinder: Tügel, Caspar, Dipl.-Ing., 20253 Hamburg (DE); Schröder, Werner Georg, Dipl.-Ing., 63762 Grossostheim (DE)
(74) Vertreter: Kasseckert, Rainer

(56) Entgegenhaltungen:
- WO-A-97/06986
- DE-A- 3 426 432
- DE-A- 4 315 824
- GB-A- 2 245 150
- US-A- 3 794 135
- US-A- 4 572 319
- US-A- 5 050 700
- US-A- 5 286 091
- PATENT ABSTRACTS OF JAPAN vol. 1995, no. 04, 31. Mai 1995 (1995-05-31) & JP 07 002055 A (TOYOTA AUTOM LOOM WORKS LTD), 6. Januar 1995 (1995-01-06)

## Beschreibung

Die Erfindung betrifft eine Fahrerrückhaltevorrichtung für ein Flurförderzeug, wobei die Fahrerrückhaltevorrichtung einen schwenkbaren Bügel aufweist, der von einer Bedienperson willkürlich zwischen einer Ruhestellung und einer Rückhaltestellung bewegbar ist und in der Rückhaltestellung arretierbar und wieder lösbar ist.

Fahrerrückhaltevorrichtungen dieser Art sind in Ausführungen bekannt, bei denen ein Rückhaltebügel zwangsweise um einen Oberkörper eines Fahrers gelegt wird. Rückhaltebügel dieser Art treffen bei den Fahrern von Flurförderzeugen auf geringe Akzeptanz, da sie die Bewegungsfreiheit des Fahrers auf dem Fahrersitz stark einengen und bei bestimmten Ausführungsformen auch ein Auf- und Absteigen auf das Flurförderzeug behindern.

Alternativ hierzu sind Sicherheitsgurte bekannt, die von dem Fahrer jedoch selbsttätig angelegt werden müssen. Dieser Vorgang ist zeitaufwendig und erfordert von dem Fahrer darüber hinaus ergonomisch ungünstige Bewegungen. Dies führt dazu, daß vorhandene Sicherheitsgurte von den Fahrern häufig nicht benutzt werden.

Aus der US 3 794 135 A ist, gemäss dem Oberbegriff des Anspruchs 1, eine Fahrerrückhaltevorrichtung bekannt, die aus einer Kombination eines Rückhaltebügels mit einem Sicherheitsgurt besteht und von der Bedienperson ebenfalls selbsttätig anzulegen ist.

Der vorliegenden Erfindung liegt die Aufgabe zugrunde, eine Fahrerrückhaltevorrichtung, die geeignet ist, bei einem Unfall, insbesondere bei einem Umkippen des Flurförderzeugs, den Fahrer auf dem Fahrersitz zu halten, derart auszubilden, dass sie den Fahrer zum Betätigen der Rückhaltevorrichtung vor Fahrtantritt motiviert.

Diese Aufgabe wird erfindungsgemäß dadurch gelöst, daß auf dem Bügel ein Lenkrad angeordnet ist. Der Bügel ist von einer Bedienperson willkürlich zwischen einer Ruhestellung und einer Rückhaltestellung bewegbar und ist in der Rückhaltestellung arretierbar und wieder lösbar. Ein durch den Fahrer willkürlich bewegbarer Bügel behindert den Fahrer nur in sehr geringem Maße, da der Bügel sich während des Aufund Absteigens in einer Ruheposition befindet. Wenn der Fahrer in bestimmten Betriebssituationen eine besonders große Bewegungsfreiheit benötigt, kann er den Bügel selbständig in die Ruhestellung bewegen. Andererseits ist nur ein einziger Handgriff erforderlich, um den Bügel in seine Rückhaltestellung zu bewegen und ihn dort zu arretieren. Aus diesen Gründen wird die erfindungsgemäße Fahrerrückhaltevorrichtung durch die Fahrer gut akzeptiert. Bei in Rückhaltestellung befindlichem Bügel sind das Lenkrad und die anderen Bedienelemente, die auf dem Bügel angeordnet sind, für den auf dem Fahrersitz sitzenden Fahrer optimal erreichbar. Hierdurch wird der Fahrer besonders motiviert, den Bügel vor jedem Inbetriebnehmen des Flurförderzeug in Rückhaltestellung zu bewegen.

In einer vorteilhaften Ausgestaltung weist die Fahrerrückhaltevorrichtung einen einzigen schwenkbaren Bügel auf. Der Fahrer muß somit zum in Kraft setzen der Fahrerrückhaltevorrichtung nur ein einziges Bauteil bewegen, wofür nur ein einziger Handgriff benötigt wird.

Mit besonderem Vorteil ist der Bügel um eine im wesentlichen vertikale Schwenkachse schwenkbar.

Zweckmäßigerweise ist die Schwenkachse seitlich neben dem Fahrersitz angeordnet. In der Ruhestellung befindet sich der Bügel somit seitlich neben dem Fahrersitz. Der Bügel wird um die Schwenkachse in seine Rückhaltestellung gedreht, wobei er sich dann im Bereich des Oberkörpers oder des Beckens des Fahrers befindet.

In einer besonders zweckmäßigen Ausgestaltung der Erfindung stellt der Bügel ein Mittel zum Zurückhalten des Fahrers auf dem Fahrersitz dar. Der Bügel ist dabei so gestaltet daß der in Rückhaltestellung arretierte Bügel bei einem Umkippen des Flurförderzeugs den Fahrer auf dem Fahrersitz hält, wobei sich der Körper des Fahrers direkt an dem Bügel abstützt.

Bei einer anderen zweckmäßigen Ausgestaltung der Erfindung ist mit dem Bügel ein Gurt verbunden, der ein Mittel zum Zurückhalten des Fahrers auf dem Fahrersitz darstellt. Der Gurt ist dabei beispielsweise als Beckengurt ausgebildet, der bei einem Schwenken des Rückhaltebügels in Rückhaltestellung zwangsweise angelegt wird. Bei einem Umkippen des Flurförderzeugs wird der Fahrer durch den Gurt auf dem Fahrersitz gehalten, wobei sich der Körper des Fahrers hauptsächlich an dem Gurt abstützt.

Gemäß einer vorteilhaften Weiterbildung der Erfindung ist mit dem Bügel ein Airbag verbunden.

Eine andere zweckmäßige Weiterbildung der Erfindung besteht darin, daß an dem Bügel mindestens ein Anzeigeelement angeordnet ist. Bei in Rückhaltestellung befindlichem Bügel sind die Anzeigeelemente optimal sichtbar.

Ebenso zweckmäßig ist es, wenn die Stillstandsbremse des Flurförderzeugs in Abhängigkeit von der Schwenkposition des Bügels lösbar ist. Bei in Ruhestellung befindlichem Bügel ist die Stillstandsbremse stets betätigt. Um die Stillstandsbremse zu lösen, muß der Fahrer den Bügel in die Rückhaltestellung bewegen. Hierdurch ist sichergestellt, daß die Fahrerrückhaltevorrichtung während des Fahrens mit dem Flurförderzeug stets wirksam ist.

Weitere Vorteile und Ausgestaltungen der Erfindung werden anhand des in den schematischen Figuren dargestellten Ausführungsbeispiels näher erläutert. Dabei zeigt
- Figur 1: eine aus dem Stand der Technik bekannte Fahrerrückhaltevorrichtung mit einem Bügel und einem Gurt,
- Figur 2: eine erfindungsgemäße Fahrerrückhaltevorrichtung mit einem Bügel mit Bedienelementen.

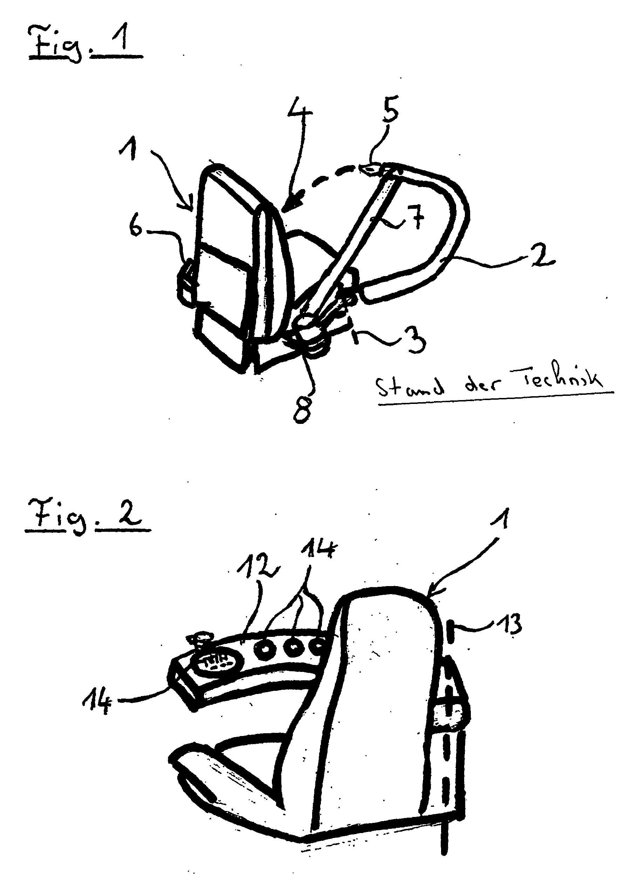

Figur 1 zeigt eine aus dem Stand der Technik bekannte Fahrerrückhaltevorrichtung an einem Fahrersitz 1. Ein Bügel 2 ist in seiner Ruhestellung dargestellt und kann um eine zumindest annähernd vertikale Achse 3 in Pfeilrichtung 4 in eine Rückhaltestellung geschwenkt werden. An dem der Achse 3 entgegengesetzten Ende des Bügels 2 befindet sich ein Schließstück 5, das in ein entsprechendes Schloß 6 am Fahrersitz 1 einrastbar ist. Durch betätigen eines - nicht dargestellten - für den Fahrer leicht erreichbaren Schalters kann das Schließstück 5 aus dem Schloß 6 wieder gelöst werden.

Mit dem Bügel 2 verbunden ist ein Gurt 7, der bei in Rückhaltestellung befindlichem Bügel 2 um den Beckenbereich des Fahrers gelegt ist. Im Bereich der Achse 3 befindet sich ein Gurtaufroller 8, der mittels einer Federkraft den Gurt 7 stets gespannt hält. Der Gurtaufroller stellt ein handelsübliches Bauteil dar, und ist mit einer ebenfalls bekannten Blockiervorrichtung ausgerüstet. Bei einer starken Beschleunigung oder einem großen Neigungswinkel des Flurförderzeugs wird der Gurt 7 im Gurtaufroller von der Blockiervorrichtung blockiert, so daß der Fahrer auf dem Fahrersitz 1 gehalten wird.

Figur 2 zeigt eine erfindungsgemäße Fahrerrückhaltevorrichtung. Hierbei ist ein in Rückhaltestellung dargestellter Bügel 12 um eine vertikale Achse 13 schwenkbar. Der Bügel 12 ist hierbei derart geformt, daß der Fahrer durch den in Rückhaltestellung arretierten Bügel 12 selbst auf dem Fahrersitz 1 gehalten wird. Auf dem Bügel sind verschiedenen Bedienelemente 14, ein Lenkrad und beispielsweise Schaltknöpfe, angeordnet. Diese befinden sich bei in Rückhaltestellung befindlichem Bügel 12 in optimaler Position zum Fahrer. Zum Aufund Absteigen schwenkt der Fahrer den Bügel 12 um die Achse 13 in seine Ruhestellung, wobei der Zugang zum Fahrersitz durch den Bügel 12 nicht behindert ist.

## Patentansprüche

1. Fahrerrückhaltevorrichtung für ein Flurförderzeug, wobei die Fahrerrückhaltevorrichtung einen schwenkbaren Bügel (12) aufweist, der von einer Bedienperson willkürlich zwischen einer Ruhestellung und einer Rückhaltestellung bewegbar ist und in der Rückhaltestellung arretierbar und wieder lösbar ist, **dadurch gekennzeichnet, daß** auf dem Bügel (12) ein Lenkrad angeordnet ist.

2. Fahrerrückhaltevorrichtung nach Anspruch 1, **dadurch gekennzeichnet, daß** die Fahrerrückhaltevorrichtung einen einzigen schwenkbaren Bügel (12) aufweist.

3. Fahrerrückhaltevorrichtung nach Anspruch 1 oder 2, **dadurch gekennzeichnet, daß** der Bügel (12) um eine im wesentlichen vertikale Schwenkachse (3, 13) schwenkbar ist.

4. Fahrerrückhaltevorrichtung nach Anspruch 3, **dadurch gekennzeichnet, daß** die Schwenkachse (3, 13) seitlich neben einem Fahrersitz (1) angeordnet ist.

5. Fahrerrückhaltevorrichtung nach einem der Ansprüche 1 bis 4, **dadurch gekennzeichnet, daß** der Bügel (12) ein Mittel zum Zurückhalten des Fahrers auf dem Fahrersitz (1) darstellt.

6. Fahrerrückhaltevorrichtung nach einem der Ansprüche 1 bis 5, **dadurch gekennzeichnet, daß** mit dem Bügel ein Gurt (7) verbunden ist, der ein Mittel zum Zurückhalten des Fahrers auf dem Fahrersitz (1) darstellt.

7. Fahrerrückhaltevorrichtung nach einem der Ansprüche 1 bis 6, **dadurch gekennzeichnet, daß** mit dem Bügel (12) ein Airbag verbunden ist.

8. Fahrerrückhaltevorrichtung nach einem der Ansprüche 1 bis 7, **dadurch gekennzeichnet, daß** an dem Bügel (12) mindestens ein Anzeigeelement angeordnet ist.

9. Fahrerrückhaltevorrichtung nach einem der Ansprüche 1 bis 8, **dadurch gekennzeichnet, daß** eine Stillstandsbremse des Flurförderzeugs in Abhängigkeit von der Schwenkposition des Bügels (12) lösbar ist.

## Claims

1. Driver restraint device for an industrial truck, the driver restraint device having a curved bar (12) which can be pivoted, can be moved as desired by an operator between a rest position and a restraint position and can be locked in the restraint position and released again, **characterized in that** a steering wheel is arranged on the curved bar (12).

2. Driver restraint device according to Claim 1, **characterized in that** the driver restraint device has a single curved bar (12) which can be pivoted.

3. Driver restraint device according to Claim 1 or 2, **characterized in that** the curved bar (12) can be pivoted about a substantially vertical pivot axis (3, 13).

4. Driver restraint device according to Claim 3, **characterized in that** the pivot axis (3, 13) is arranged laterally beside a driver's seat (1).

5. Driver restraint device according to one of Claims 1 to 4, **characterized in that** the curved bar (12) represents a means of holding the driver back on the driver's seat (1).

6. Driver restraint device according to one of Claims 1 to 5, **characterized in that** a belt (7), which represents a means of holding the driver back on the driver's seat (1), is connected to the curved bar.

7. Driver restraint device according to one of Claims 1 to 6, **characterized in that** an airbag is connected to the curved bar (12).

8. Driver restraint device according to one of Claims 1 to 7, **characterized in that** at least one indicating element is arranged on the curved bar (12).

9. Driver restraint device according to one of Claims 1 to 8, **characterized in that** a parking brake of the industrial truck can be released as a function of the pivoted position of the curved bar (12).

## Revendications

1. Dispositif de retenue du conducteur d'un chariot de manutention, dans lequel le dispositif de retenue du conducteur présente un arceau pivotant (12) qui peut être déplacé volontairement par un opérateur entre une position de repos et une position de retenue et qui peut être bloqué dans la position de retenue et à nouveau déverrouillé, **caractérisé en ce qu'**un volant de direction est disposé sur l'arceau (12).

2. Dispositif de retenue de conducteur selon la revendication 1, **caractérisé en ce que** le dispositif de retenue de conducteur présente un seul arceau pivotant (12).

3. Dispositif de retenue de conducteur selon la revendication 1 ou 2, **caractérisé en ce que** l'arceau (12) peut pivoter autour d'un axe de pivotement essentiellement vertical (3, 13).

4. Dispositif de retenue de conducteur selon la revendication 3, **caractérisé en ce que** l'axe de pivotement (3, 13) est disposé latéralement à côté d'un siège du conducteur (1).

5. Dispositif de retenue de conducteur selon l'une quelconque des revendications 1 à 4, **caractérisé en ce que** l'arceau (12) constitue un moyen de retenue du conducteur sur le siège du conducteur (1).

6. Dispositif de retenue de conducteur selon l'une quelconque des revendications 1 à 5, **caractérisé en ce qu'**une sangle (7) est associée à l'arceau, laquelle constitue un moyen de retenir le conducteur sur le siège du conducteur (1).

7. Dispositif de retenue de conducteur selon l'une quelconque des revendications 1 à 6, **caractérisé en ce qu'**un airbag est associé à l'arceau (12).

8. Dispositif de retenue de conducteur selon l'une quelconque des revendications 1 à 7, **caractérisé en ce qu'**au moins un élément d'indication est disposé sur l'arceau (12).

9. Dispositif de retenue de conducteur selon l'une quelconque des revendications 1 à 8, **caractérisé en ce qu'**un frein d'immobilisation du chariot de manutention peut être desserré en fonction de la position de pivotement de l'arceau (12).
